# EUROPÄISCHE PATENTSCHRIFT

(11) **EP 0 985 200 B1**
(45) Veröffentlichungstag und Bekanntmachung des Hinweises auf die Patenterteilung: **02.01.2002**
(21) Anmeldenummer: 99919109.1
(22) Anmeldetag: 17.03.1999
(51) Int. Cl.: G07F 7/06

(54) **HANDGRIFF**
HAND GRIP
POIGNEE

(30) Priorität: 18.03.1998 DE 19811774
(43) Veröffentlichungstag der Anmeldung: 15.03.2000
(73) Patentinhaber: WANZL METALLWARENFABRIK GMBH, D-89336 Leipheim (DE)
(72) Erfinder: KRIZ, Peter, D-73235 Weilheim (DE)
(86) Internationale Anmeldenummer: DE9900805
(87) Internationale Veröffentlichungsnummer: WO9948063

(56) Entgegenhaltungen:
- EP-A- 0 421 101
- EP-A- 0 515 979
- EP-A- 0 790 586
- EP-A- 0 844 592
- DE-A- 4 230 361
- DE-A- 4 235 473
- DE-A- 4 324 889
- DE-A- 19 734 865
- DE-U- 9 313 499

## Beschreibung

Die Erfindung betrifft einen Handgriff mit einem Mittelstück und mit zwei an den Enden des Mittelstückes befestigbaren Endstücken, die eine Einrichtung zum Befestigen an einem Transportwagen aufweisen, wobei zwei durch einen Abschnitt des Mittelstückes getrennte Griffabschnitte vorgesehen sind.

Zum nächstliegenden Stand der Technik zählt ein als Münzschloß ausgebildeter Handgriff, der in der DE 37 14 115 C2 beschrieben ist. Die Griffabschnitte dieses Handgriffes münden in kappenförmige Endstücke, die eine Einrichtung zum Befestigen an einem Transportwagen aufweisen. Das Mittelstück trägt ein Münzschloß, das in bekannter Weise ein An- und Abkoppeln an oder von einem weiteren Transportwagen erlaubt. Wird eine Gruppe angekoppelter Transportwagen geschoben oder gezogen, was z.B. bei als Einkaufswagen gestalteten Transportwagen zu beobachten ist, und wird der so gebildete Stapel z.B. auf Kurvenbahnen oder unebenem Gelände bewegt, wirken über die Verbindungsketten, welche die einzelnen Münzschlösser verbinden, starke Zugkräfte, die ein Durchbiegen der Handgriffe bewirken können. Die Gefahr des Durchbiegens besteht insbesondere dann, wenn der Handgriff so gestaltet ist, wie dies in Fig. 1 der DE 37 14 115 C2 gezeigt ist.

Die Aufgabe der Erfindung besteht darin, einen Handgriff der hier vorliegenden Art so weiterzuentwickeln, daß der eben beschriebene Nachteil vermieden oder zumindest gemildert wird.

Die Lösung der Aufgabe besteht darin, daß jeder Griffabschnitt durch einen Vorsprung des Mittelstückes und durch einen Vorsprung eines Endstückes gebildet ist.

Ein Vorteil der Erfindung besteht darin, daß das Mittelstück des Handgriffes kürzer als bisher gestaltet ist und daß beim Bewegen eines Stapels von Transportwagen, die mit dem erfindungsgemäßen Handgriff ausgestattet sind, die auftretenden Biegekräfte in einem günstigeren Verhältnis als bisher vom Mittelstück und von den beiden Endstücken aufgenommen werden. Die nunmehr als abgewinkelte Gebilde geformten Endstücke können, als Kunststoffteile gestaltet, an den die Biegekräfte übernehmenden Bereichen massiv ausgebildet sein, was herstellungstechnisch kein Problem darstellt. Andererseits können die nun kürzeren Vorsprünge des Mittelstückes, die im Beispiel hohl ausgebildet sind, mit relativ geringer Wandstärke gefertigt werden, was in vorteilhafter Weise zu einer Materialeinsparung führt. Bei der Herstellung des aus Kunststoff bestehenden Mittelstückes wird die Gefahr eines Verziehens oder Verkrümmens des Mittelteiles reduziert, da dieses, wie erwähnt, nun kürzer gestaltet werden kann.

Die Erfindung läßt einen weiteren Vorteil entstehen, der darin besteht, daß auf einfache Weise verschieden lange Handgriffe herstellbar sind. In solchen Fällen ist es vorteilhaft, das Mittelstück immer gleich lang auszubilden und die erforderlichen Längenänderungen nur an den Endstücken vorzusehen. Gleiches gilt auch, wenn die Endstücke mit verschiedenen Aufhahmetaschen ausgestattet werden sollen. Es entstehen dann Endstücke, die sich beispielsweise nur auf Rohrabschnitte aufsetzen lassen. Andere Endstücke wiederum sind so gestaltet, daß sie nur auf Vorsprünge aufsetzbar sind, die aus Draht gestaltet sind und beispielsweise an Einkaufswagenkörben verwirklicht sind. Es ist allemal einfacher, modifizierbare Spritzgußwerkzeuge für die kleineren Endstücke herzustellen als Gleiches beim Werkzeug für das komplizierte Mittelstück versuchen zu wollen. Letzteres wäre wesentlich teurer.

Die Empfehlung, das Mittelstück immer gleich lang zu gestalten, ergibt ebenfalls noch einen weiteren Vorteil. Da das Mittelstück als Funktionsträger vorgesehen ist, bildet es ein Montageteil, an dem in Montageschritten beispielsweise ein Pfandschloß und/oder eine Informationseinrichtung angebracht werden. Ist das Mittelteil immer gleich, läßt sich auf kostengünstige Weise ein automatisches Montieren der zusätzlichen Funktionsträger verwirklichen.

Durch die DE-U-89 15 762.1 und durch die EP 0 545 233 A1 sind Vorrichtungen zum Ankoppeln von Einkaufswagen bekannt. Die Endstücke dieser als Handgriffe gestalteten Vorrichtungen dienen ebenfalls zu deren Befestigung an Transportwagen, doch vermitteln beide Druckschriften nicht, ob die Endstücke an den Vorrichtungen nun separat befestigt oder aber angeformt sind. Auch werden die Griffabschnitte nur durch das Mittelstück gebildet.

Die EP 0 628 933 A1 beschreibt einen Aufnahmekörper für ein Pfandschloß eines Einkaufswagens. Bei diesem Aufnahmekörper ragen beidseitig Vorsprünge vor, die jeweils in das Innere eines Hohlprofiles, insbesondere je eines Rohres einsteckbar sind, die den Handgriff des Einkaufswagens bilden. Wie ein derart gestalteter Handgriff am Einkaufswagen befestigt wird, vermittelt die genannte Schrift nicht. Hinweise auf passende Endstücke fehlen. Die beiden Griffabschnitte werden durch die beiden Rohre gebildet.

Die Merkmale des Oberbegriffs des Anspruchs 1 sind aus DE 4 235 473 A1 bekannt.

Die Erfindung wird anhand von Ausführungsbeispielen näher erläutert. Es zeigt
Fig. 1 einen Handgriff in Draufsicht;
Fig. 2 ein Endstück und einen Abschnitt des Mittelstückes;
Fig. 3 ein Endstück sowie
Fig. 4 einen Schnitt durch einen Vorsprung des Mittelstückes mit eingesetztem Endstück.

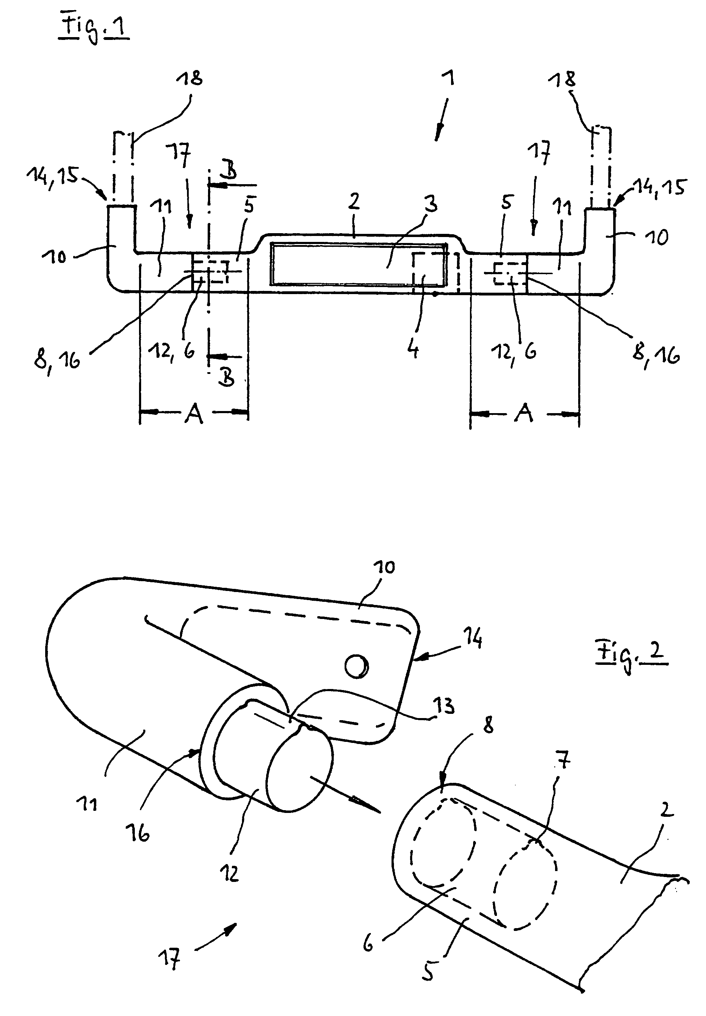

Fig. 1 zeigt einen Handgriff 1 mit einem Mittelstück 2, das zu beiden Seiten je ein Endstück 10 trägt. Die Endstücke 10 sind spiegelbildlich gestaltet. Das Mittelstück 2 ist bevorzugt als Funktionsträger vorgesehen. Es bietet beispielsweise eine Aufnahme 3 für einen Werbeträger und/oder für eine sonstige bekannte Informationseinrichtung. Das Mittelstück 2 kann aber auch einen Raum bieten für ein Münzschloß 4, etwa so, wie in der EP 0 545 233 A1 vorgeschlagen. Die beiden Enden des Mittelstückes 2 sind durch je einen Vorsprung 5 gebildet. An die Vorsprünge 5 schließt jeweils ein weiterer Vorsprung 11 an, wobei jeder Vorsprung 11 Bestandteil eines Endstükkes 10 ist. Die Vorsprünge 11 der Endstücke 10 enden mit je einem Zapfen 12, die in montiertem Zustand des Handgriffes 1 in an den Vorsprüngen 5 des Mittelstückes 2 befindliche Vertiefungen 6 eingesetzt und gesichert sind. An die Vorsprünge 11 der Endstücke 10 schließt in einem etwa rechten Winkel jeweils eine Aufnahmetasche 15 an, die eine Einrichtung 14 zum Befestigen der Endstücke 10 an einem Transportwagen bildet. Die Einrichtung 14 kann beispielsweise so gestaltet sein, wie dies in der DE 29 05 848 C2 beschrieben ist. In die Einrichtung 14 der beiden Endstücke 10 führen Tragarme 18, die einem nicht näher dargestellten, von Hand bewegbaren Transportwagen angehören. Je ein Vorsprung 5 des Mittelstückes 2 und die Vorsprünge 11 der Endstücke 10 bilden zwei Griffabschnitte 17 des Handgriffes 1. Die Breite oder der Bereich der beiden Griffabschnitte 17 ist durch die Maße A angegeben.

Fig. 2 zeigt ein Endstück 10, das links an einem Transportwagen anzuordnen ist sowie einen Abschnitt des Mittelstückes 2. Von der Einrichtung 14 biegt winklig der Vorsprung 11 ab, der mit dem vorstehenden Zapfen 12 endet. Der Zapfen 12 trägt einen längsverlaufenden Steg 13. Der links angeordnete Vorsprung 5 am Mittelstück 2 weist eine der Form und Kontur des Zapfens 12 nachempfundene Vertiefung 6 auf, in welche der Zapfen 12 einsetzbar ist. Dabei wird der Steg 13 von einer an den Steg 13 angepaßten, in der Vertiefung 6 befindlichen Rille 7 aufgenommen, um so eine Verdrehsicherung zwischen dem Endstück 10 und dem Mittelteil 2 zu erhalten. Die so gestaltete Verbindung kann durch Kleben oder durch Einführen einer Sicherungsschraube zusätzlich gesichert werden. In den hier gezeigten Ausführungsbeispielen weisen die Vorsprünge 5, 11 einen zylindrischen Querschnitt auf, was das Anbringen der eben erwähnten Verdrehsicherung erfordert. Der Querschitt der Vorsprünge 5, 11 kann aber auch anders als zylindrisch ausgebildet sein. Dies gilt auch für die Zapfen 12. Da jedoch die Vorsprünge 5, 11 die Griffabschnitte 17 bilden, ist es wichtig, die Schnittkanten 16 der Vorsprünge 11 der Endstücke 10 und die Schnittkanten 8 der Vorsprünge 5 des Mittelstückes 2 kongruent zu gestalten, um an den gemeinsamen Verbindungsstellen der Griffabschnitte 17 keine störenden Kanten, Absätze oder dergleichen entstehen zu lassen.

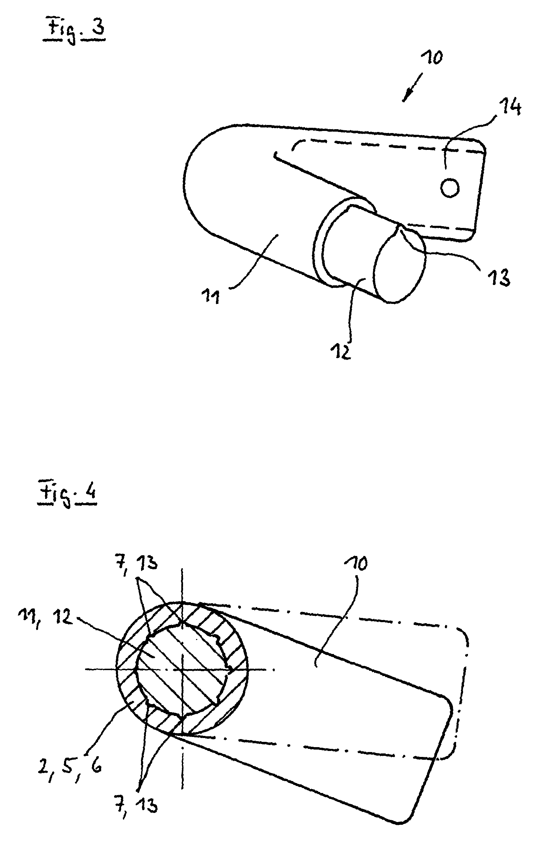

Fig. 3 zeigt ein einzelnes Endstück 10. Man erkennt den mit einem Steg 13 ausgestatteten Zapfen 12, der am Vorsprung 11 angeordnet ist. Der Vorsprung 11 bildet einen Winkel zur taschenförmigen Einrichtung 14. Die Zeichnung zeigt das linksseitig anzuordnende Endstück 10. Das rechts anzuordnende, nicht dargestellte Endstück 10 ist spiegelbildlich zum linksseitigen Endstück 10 gestaltet.

In Fig. 4 ist ein Schnitt durch einen Vorsprung 5 des Mittelstuckes 2 und durch den Zapfen 12 des Vorsprunges 11 eines Endstückes 10 gezeigt, vgl. Schnittlinie "B - B" in Fig. 1. Am Umfang des zylindrischen Zapfens 12 sind in gleichmäßigen Abständen längs verlaufende Stege 13 angeordnet, die sich in entsprechend angeordneten Rillen 7 in der zylindrischen Vertiefung 6 des Vorsprungs 5 des Mittelstückes 2 befinden. Durch diese Anordnung ist es möglich, Endstücke 10 in unterschiedlichen Positionen, siehe strichpunktiert gezeichnete Lage, auf das Mittelstück 2 aufzusetzen.

## Patentansprüche

1. Handgriff (1) mit einem Mittelstück (2) und mit zwei an den Enden des Mittelstückes (2) befestigbaren Endstücken (10), die eine Einrichtung (14) zum Befestigen an einem Transportwagen aufweisen, wobei zwei durch einen Abschnitt des Mittelstückes (2) getrennte Griffabschnitte (17) vorgesehen sind, **dadurch gekennzeichnet, daß** jeder Griffabschnitt (17) durch einen Vorsprung (5) des Mittelstückes (2) und durch einen Vorsprung (11) eines Endstückes (10) gebildet ist.

2. Handgriff nach Anspruch 1, **dadurch gekennzeichnet, daß** die Vorsprünge (11) der Endstücke (10) einen Zapfen (12) tragen und daß die Zapfen (12) zum Einfügen in Vertiefungen (6) bestimmt sind, die sich in den Vorsprüngen (5) des Mittelstückes (2) befinden.

3. Handgriff nach Anspruch 1 oder 2, **dadurch gekennzeichnet, daß** der Vorsprung (11) und die Einrichtung (14) der Endstücke (10) in einem Winkel zueinander angeordnet sind.

4. Handgriff nach einem der Ansprüche 1 bis 3, **dadurch gekennzeichnet, daß** die Endstücke (10) gegen Verdrehen gesichert am Mittelstück (2) befestigbar sind.

5. Handgriff nach einem der Ansprüche 1 bis 4, **dadurch gekennzeichnet, daß** die Vorsprünge (5, 11) einen zylindrischen Querschnitt aufweisen.

6. Handgriff nach einem der Ansprüche 1 bis 5, **dadurch gekennzeichnet, daß** die Schnittkanten (16) der Vorsprünge (11) der Endstücke (10) und die Schnittkanten (8) der Vorsprünge (5) des Mittelstückes (2) zueinander kongruent gestaltet sind.

7. Handgriff nach einem der Ansprüche 1 bis 6, **dadurch gekennzeichnet, daß** die Endstücke (10) in verschiedenen Positionen am Mittelstück (2) befestigbar sind.

## Claims

1. A handle (1) comprising a central piece (2) and two end pieces (10) fixable to the ends of the central piece (2) and provided with a device (14) for fixing to a trolley, wherein two gripping portions (17) separated by a portion of the central piece (2) are provided, **characterised in that** each gripping portion (17) is formed by a projection (5) of the central piece (2) and a projection (11) of an end piece (10).

2. A handle according to claim 1, **characterised in that** the projections (11) of the end pieces (10) carry a pin (12) and **in that** the pins (12) are intended for insertion into recesses (6) provided in the projections (5) of the central piece (2).

3. A handle according to claim 1 or 2, **characterised in that** the projection (11) and the device (14) of the end pieces (10) are arranged at an angle to one another.

4. A handle according to any one of claims 1 to 3, **characterised in that** the end pieces (10) are fixable to the central piece (2) so as to be secured against rotation.

5. A handle according to any one of claims 1 to 4, **characterised in that** the projections (5, 11) have a cylindrical cross-section.

6. A handle according to any one of claims 1 to 5, **characterised in that** the cut edges (16) of the projections (11) of the end pieces (10) and the cut edges (8) of the projections (5) of the central piece (2) are formed so as to be congruent.

7. A handle according to any one of claims 1 to 6, **characterised in that** the end pieces (10) are fixable to the central piece (2) in different positions.

## Revendications

1. Poignée (1) comprenant une pièce centrale (2) et deux pièces d'extrémité (10) pouvant être fixées aux extrémités de ladite pièce centrale (2), qui présentent un système (14) destiné à la fixation à un chariot de transport, sachant qu'il est prévu deux zones de préhension (17) séparées par un segment de la pièce centrale (2), **caractérisée par le fait que** chaque zone de préhension (17) est formée par une saillie (5) de la pièce centrale (2) et par une saillie (11) d'une pièce d'extrémité (10).

2. Poignée selon la revendication 1, **caractérisée par le fait que** les saillies (11) des pièces d'extrémité (10) portent un tenon (12) ; et **par le fait que** les tenons (12) sont destinés à l'insertion dans des renfoncements (6) pratiqués dans les saillies (5) de la pièce centrale (2).

3. Poignée selon la revendication 1 ou 2, **caractérisée par le fait que** la saillie (11) et le système (14) des pièces d'extrémité (10) sont disposés en décrivant mutuellement un angle.

4. Poignée selon l'une des revendications 1 à 3, **caractérisée par le fait que** les pièces d'extrémité (10) peuvent être fixées à la pièce centrale (2) avec arrêt antirotation.

5. Poignée selon l'une des revendications 1 à 4, **caractérisée par le fait que** les saillies (5, 11) présentent une section transversale cylindrique.

6. Poignée selon l'une des revendications 1 à 5, **caractérisée par le fait que** les arêtes de sectionnement (16) des saillies (11) des pièces d'extrémité (10), et les arêtes de sectionnement (8) des saillies (5) de la pièce centrale (2), possèdent une configuration complémentaire.

7. Poignée selon l'une des revendications 1 à 6, **caractérisée par le fait que** les pièces d'extrémité (10) peuvent être fixées à la pièce centrale (2) dans des positions différentes.
